# EUROPEAN PATENT APPLICATION

(11) **EP 3 450 298 A1**
(43) Date of publication of application: **06.03.2019**
(21) Application number: 16883491.9
(22) Date of filing: 31.12.2016
(51) Int. Cl.: B63B 11/02, B63B 25/28, B65G 63/00, B66C 17/20, B66C 19/00

(54) **METHOD FOR TRANSFERRING STANDARDISED CONTAINERS BETWEEN A CONTAINER SHIP AND A QUAY**

(30) Priority: 06.01.2016 ES 201630005
(71) Applicant: Ruiz Vega, Antonio Marcos, 11500 El Puerto de Santa María (ES)
(72) Inventor: Ruiz Vega, Antonio Marcos, 11500 El Puerto de Santa María (ES)
(86) International application number: PCT/ES2016/070953
(87) International publication number: WO 2017/118772

(57) **Abstract**

Procedure for the transfer of standardized containers between a container ship and a quay, by use of ship-to-shore gantry cranes, characterized in that throughout the maneuver the containers remain with their longitudinal axes perpendicular to the edge of the quay.

To carry out this procedure two inventions closely related to it are required: a container ship where the standardized containers are arranged with their longitudinal axes orthogonal to the longitudinal axis of the ship and a ship-to-shore gantry crane capable to transfer standardized containers in a position such that their longitudinal axes are orthogonal to the edge of the quay; this allows the distance between their legs to be smaller than that of the current cranes since said distance depends on the arrangement of the container when passing between them; as a result, a higher number of cranes can operate on the same ship of the same length, improving the loading / unloading performances.

## Description

### Field of the Invention

The present invention belongs to the sector of terrestrial maritime transport by the utilization of containers and more specifically to the transfer or tranship to storage areas, to freight stations or to ports (B65G 63/00).

The main object of the present invention is a procedure for the transfer of standardized containers between a container ship and a quay, by the use of ship-to-shore gantry cranes, characterized in that throughout the maneuver the containers remain with their longitudinal axes perpendicular to the edge of the quay.

To carry out this procedure two most closely related with it inventions are necessary: a container ship with the standardized containers arranged with their longitudinal axes orthogonal to the longitudinal axis of the ship (B63B 11/00; B63B 25/00) and a ship-to-shore gantry crane capable of transferring standardized containers to a position such that their longitudinal axes to be orthogonal to the edge of the quay (B66C 19/00; B66C 17/00); this allows that the separation between its legs to be less than that of the current cranes since said distance depends on the arrangement of the container when passing between them; in this way a greater number of cranes operating in the same ship at equal length are achieved, improving the performance of loading/unloading.

### Background

The maritime transport of goods in containers of standardized dimensions has experienced a great growth in the last fifteen years due to the ease of combination with other types of transport (by railroad, by road), to the high efficiency of loading and unloading the container ship within the port and to the gradual automation of the operations in the terminal of containers itself that allows to optimize the movements of the standardized containers within it.

In line with that great growth, the fleet of container ships has increased in both the number and size of said ships; moreover, the size and range of the ship-to-shore gantry cranes that conduct the loading and unloading of the container ships has been increasing in parallel with them and with the greater and greater required performances.

Within a terminal of containers the loading and unloading of these between the container ship and the terminal is conducted by means of ship-to-shore gantry cranes over rails located in the terminal itself, gantry cranes that move along the full length of the quay; the transfer of the standardized containers from the operation area of these gantry cranes to the rear storage esplanade, is generally conducted by trucks or mobile gantries; inside that rear storage esplanade the transfer of containers is conducted in a manual (by means of reach stackers) semiautomatic or automatic way.

All the operation of the loading and unloading of standardized containers and the dimensions of the employed for this equipment are fixed, amongst other factors, for the arrangement of the standardized containers in the container ships; this arrangement is widespread in the present container ships and is such that the longitudinal axes of the standardized containers are parallel to the longitudinal axis of the container ship. Therefore, the ship-to-shore gantry cranes are geometrically dimensioned for the loading and unloading of these standardized containers for that arrangement in the container ship; for that motive, the distance between the legs over a same rail of these gantry cranes depends to the length of the standardized containers that have to be moved passing between them plus a margin of safety on each side between each leg and the standardized container.

Gantry cranes capable of handling several standardized containers at the same time with strict separation between them but always with their longitudinal axes parallel to the quay have been developed (in EP 0318264 A1 a crane with these characteristics is described)

The unloading in the transport vehicles is normally conducted also in that arrangement although there are patents that consider a turn of the standardized container by 90° until positioning it with its longitudinal axis perpendicular to the quay, turn conducted with devices incorporated or close to the cranes (in ES 2498916 T3 it is described a gantry crane with double trolley that conducts this maneuver and in ES 2336818 T3 it is described a process of loading/unloading of containers that includes the turn of them in a device close to the cranes).

### Summary of the Invention

The invention has as its objective to improve the performances of loading/unloading of standardized containers between a container ship and the quay of a port terminal and, also, to obtain a better use of the length of said quay.

Specifically, it is a procedure for the transfer (loading/unloading) of standardized containers from a container ship to the quay and conversely, by the utilization of ship-to-shore gantry cranes, which is characterized because throughout the maneuver the standardized containers are positioned with their longitudinal axis perpendicular to the quay; for this and unlike the current ships, the standardized containers must be arranged in the container ship with their longitudinal axes orthogonal to the longitudinal axis of the ship; the ship-to-shore gantry cranes, in turn, must have capacity to maneuver the standardized containers in that position. With this arrangement of the standardized containers the width of the cranes can decrease as this depends on the width of the standardized container that must pass between its legs (8 feet) and not on the length of the same (20 or 40 feet), as in the current cranes; this allows a greater number of cranes operating in the same ship at equal length, which effects a shorter time for the total loading/unloading and, moreover, allows the better use of the length of the quay of the terminal.

To carry out this procedure two new inventions closely related to it are necessary; on the one hand, a container ship with the standardized containers arranged with their longitudinal axes orthogonal to the longitudinal axis of the ship and, on the other, a ship-to-shore gantry crane capable of transferring standardized containers to a position such that their longitudinal axes to be orthogonal to the edge of the quay which allows that the distance between legs to be noticeably smaller than the distance of the present cranes since, as has been indicated, said distance depends on the arrangement of the standardized container when passing between them.

The first invention closely related to the procedure is a container ship that is characterized because the standardized containers are arranged with their longitudinal axes orthogonal to the longitudinal axis of the ship both in the holds and outside of them; for it the holds where they are stored are formed by transverse bulkheads orthogonal to the longitudinal axis of the ship, bulkheads that contribute to the resistance of the same, with a separation between these transverse bulkheads such as to allow the placement of a whole number of standardized containers arranged transversely; moreover, each one of these holds between transverse bulkheads in turn is subdivided by longitudinal secondary bulkheads separated from each other by the length of a standardized container plus the necessary clearances; in these longitudinal secondary bulkheads and on the inside of the sides of the hull that close the hold vertical cell guides are installed so as to allow to arrange the placement of the standardized containers stacked with their longitudinal axis perpendicular to the longitudinal axis of the ship. These vertical cell guides can be extended outside the holds and above them, installing them on longitudinal frames of suitable rigidity in vertical extension of the longitudinal secondary bulkheads and of the sides of the hull, longitudinal frames that with the help of closing transverse frames of suitable rigidity in vertical extension of the transverse bulkheads constitute a cellular structure, exterior to the holds, where standardized containers can be arranged in the thus formed cells with the same arrangement as those located in said holds.

The second invention closely related to the procedure is a ship-to-shore gantry crane for loading and unloading of standardized containers that is supported by four legs with rolling mechanisms (sets of support wheels), two front on a front rail and two rear on a rear rail, allowing the movement along the quay; this crane has a boom perpendicular to the quay located in the opening formed between the legs and that is supported by the gantry, boom that supports a trolley that moves longitudinally under it and from which hangs in turn by means of cables a container clamping mechanism (spreader) equipped with vertical movement, according to needs, thanks to lifting and lowering means located on the trolley. The invention centers on that the spreader is arranged so that its longitudinal axis coincides with the longitudinal axis of the boom so that the standardized containers are loaded and unloaded with their longitudinal axis perpendicular to the edge of the quay; this allows that the existing distance between legs on the same rail can be reduced adjusting it in such way that, without endangering the stability of the gantry crane, allows the passage between the legs of the width of a standardized container with the necessary clearances, now for security, logistical or of any other kind reasons, between standardized container and legs.

The procedure of unloading of standardized containers from a container ship to the quay comprises the following steps:
- Berthing of container ship with transversal arrangement of the standardized containers inside and outside the holds.
- Positioning on the edge of the quay of ship-to-shore gantry crane with capacity to maneuver these standardized containers by means of a spreader whose longitudinal axis coincides in direction with the longitudinal axis of the standardized containers (both axes orthogonal to the quay).
- Forward movement of the trolley under the boom of the crane until being positioned on the standardized container to be moved, with the spreader elevated.
- With the lifting and lowering means located on the trolley, maneuver of descent of the spreader until it is fixed and secured to the standardized container.
- Maneuver of ascent of the spreader - standardized container set and subsequent backwards movement of the trolley under the boom, passing between the legs of the crane, until being positioned on the means of transport previously located under the crane in orthogonal position to the quay.
- With the lifting and lowering means located on the trolley, maneuver of descent of the spreader - standardized container set until having the standardized container resting on the means of transport and fixed on the same; disconnection of the spreader fixings on the standardized container.
- Maneuver of ascent of the empty spreader and forward movement of the trolley under the boom of the crane until it is positioned, with the spreader elevated, on a new standardized container to be transferred to start again the cycle.

The procedure of loading of standardized containers from the quay to a container ship comprises the following steps:
- Berthing of container ship with transversal arrangement of the standardized containers inside and outside the holds.
- Positioning on the edge of the quay of ship-to-shore gantry crane with capacity to maneuver these standardized containers by means of a spreader whose longitudinal axis coincides in direction with the longitudinal axis of the standardized containers (both axes orthogonal to the quay).
- Positioning on the edge of the quay, under the crane and in orthogonal position to the quay of the means of transport with the standardized container to be loaded in the ship.
- Movement of the trolley under the boom of the crane until being positioned on the means of transport - standardized container set, with the spreader elevated.
- With the lifting and lowering means located on the trolley, maneuver of descent of the spreader until it is fixed and secured to the standardized container; release of the fixings of the standardized container with the means of transport.
- Maneuver of ascent of the spreader - standardized container set and subsequent forward movement of the trolley under the boom, passing between the legs of the crane, until being positioned on the corresponding cell in the container ship.
- With the lifting and lowering means located on the trolley, maneuver of descent of the spreader - standardized container set using the vertical cell guides of the ship until leaving the standardized container on its final position, already over another standardized container already placed, already on the bottom of the hold; subsequent disconnection of the spreader fixings on the standardized container and fastening of the standardized container on the ship with stowage elements.
- Maneuver of ascent of the empty spreader and subsequent backwards movement of the trolley under the boom, passing between the legs of the crane, until it is positioned, with the spreader elevated, on a new means of transport - standardized container set to start again the cycle.

The current container ships can be adapted to this procedure; this is achieved by subdividing all or part of the holds formed by the existing transverse bulkheads by means of longitudinal secondary bulkheads separated from each other by the length of a standardized container plus the necessary clearances, by disassembling the existing vertical cell guides in the transverse bulkheads and installing vertical cell guides in the new longitudinal secondary bulkheads and on the inside of the sides of the hull so that standardized containers can be arranged in the thus formed cells with their longitudinal axis perpendicular to the longitudinal axis of the ship. These new vertical cell guides can be extended outside the holds and above them, installing them on longitudinal frames of suitable rigidity in vertical extension of the longitudinal secondary bulkheads and of the sides of the hull, longitudinal frames that with the help of closing transverse frames of suitable rigidity in vertical extension of the transverse bulkheads constitute a cellular structure, exterior to the holds, where standardized containers can be arranged in the thus formed cells with the same arrangement as those located in said holds. These last transverse frames can be achieved by adapting the ones the ship generally has, frames from which the vertical cell guides will have to be disassembled.

This procedure can also be applied to container ships with transversal arrangement of the standardized containers implemented and in which for the stowage of said standardized containers, already in all or in part of the loading areas of the ship, vertical cell guides are not used but, in those areas without guides, the stowage is done by lashing.

Generalizing, this procedure can be applied to any merchant ship in general characterized because all or part of its holds and/or of the outer areas on them are adjusted for the stowage of standardized containers arranged with their longitudinal axes orthogonal to the longitudinal axis of the ship.

As for cranes, this procedure can be applied to ship-to-shore gantry cranes whose frame results from the composition of two or more individual frames, being supported by three or more pairs of legs with rolling mechanisms, three or more front legs on a front rail and three or more rear legs on a rear rail, allowing the movement along the quay; the total width of these composite cranes must be such as to allow the placement of two or more independent booms perpendicular to the quay, supported by the gantry and located in the two or more openings formed between the legs; each one of these booms supports a trolley that moves longitudinally under it and from which hangs in turn a container clamping mechanism (spreader) equipped with vertical movement, according to needs, thanks to lifting and lowering means located on the trolley and that, just as the individual cranes, is arranged such that its longitudinal axis coincides with the longitudinal axis of the boom so that the standardized containers are loaded and unloaded with their longitudinal axis perpendicular to the edge of the quay.

This procedure can also be applied to ship-to-shore gantry cranes whose frame is supported by four legs with rolling mechanisms, two front on a front rail and two rear on a rear rail, allowing the movement along the quay, and whose characteristic is that the gap between legs of the same rail is such as to allow the placement of two or more independent booms perpendicular to the quay, supported by the gantry and located in the gap formed between the legs; each one of these booms, supports a trolley that moves longitudinally under it and from which hangs in turn a container clamping mechanism (spreader) equipped with vertical movement, according to needs, thanks to lifting and lowering means located on the trolley and that, just as the individual cranes, is arranged such that its longitudinal axis coincides with the longitudinal axis of the boom so that the standardized containers are loaded and unloaded with their longitudinal axis perpendicular to the edge of the quay; the former allows that the existing separation between legs on the same rail can be reduced adjusting it in such way that, without endangering the stability of the gantry crane and optimizing as much as possible that adjustment with regard to minimizing the movement of the crane along the quay in the loading and unloading operations, allows the passage between the width between the legs of two or more standardized containers with the necessary clearances, either for reasons of safety, logistics or of any other nature, between standardized container - standardized container and between standardized container - leg.

The described in the previous paragraph ship-to-shore gantry cranes can have a variant that consists in that the two or more independent booms are replaced by a single boom or a smaller number (divisor normally) of them perpendicular to the quay, supported by the gantry and located in the gap formed between the legs, boom/s of a suitable width to allow the support of two, three or more trolleys independent with each other and that move longitudinally under it; from each one of the trolleys hangs in turn a container clamping mechanism (spreader) equipped with vertical movement, according to needs, thanks to lifting and lowering means located on the trolley, spreader arranged such that its longitudinal axis coincides with the longitudinal axis of the boom so that the standardized containers are loaded and unloaded with their longitudinal axis perpendicular to the edge of the quay.

In addition, this procedure can be applied to ship-to-shore gantry cranes resulting from the composition of two or more gantry cranes of the ones described in the two previous paragraphs, the set being supported by three or more pairs of legs with rolling mechanisms, three or more front legs on a front rail and three or more rear legs on a rear rail, allowing the movement along the quay; the total width of these composite cranes must be such as to allow the placement of two or more groups of two or more independent booms each, or two or more groups of a single boom or of a smaller number (divisor normally) of the number of independent booms, with two, three or more trolleys independent with each other under them; these booms are all perpendicular to the quay, supported by the gantry and located in the two or more openings formed between the legs, booms that support trolleys that move longitudinally under them and from each one of them hangs in turn a container clamping mechanism (spreader) equipped with vertical movement, according to needs, thanks to lifting and lowering means located on the trolley, spreader arranged such that its longitudinal axis coincides with the longitudinal axis of the boom so that the standardized containers are loaded and unloaded with their longitudinal axis perpendicular to the edge of the quay.

Also, this procedure can be applied to ship-to-shore gantry cranes in which the gaps between standardized container - standardized container are non-existent, which allows to operate with standardized containers adjacent to the ship provided that the crossing at the level between them is avoided, both vertically and horizontally, during the loading - unloading operations.

When applying the procedure to the previously described ship-to-shore gantry cranes, the rear legs of these can hinder, to a greater or lesser extent, the passage between them of the transport means of standardized containers when these move from the storage area until the loading/unloading area located under the cranes and, likewise, can hinder the positioning maneuvers for these operations; this can occur, above all, with the gantry cranes of a single boom of a single trolley by gap. By means of a loading beam all along the line of the rear rail, elevated by pillars of a sufficient height to allow the passage of the transport means under it, pillars that go to foundation, and with a spacing between said pillars that is considerably greater than the distance between legs of crane, a more clear crossing area can be obtained and, therefore, that facilitates the passage and the maneuvers of the transport means; on that loading beam the rear rail is fixed, on that elevated rail the rear legs of the cranes with their rolling mechanisms are rested, legs that, for that reason, are shorter than the front legs.

The procedure can be applied to the loading/unloading in a single cycle of two or more standardized containers contiguous in width (with the long sides adjacent) by multiple spreaders capable to maneuver all at once that number of standardized containers. In the case of a double spreader, this is of an identical length to the simple spreaders but twice as wide; the longitudinal axis of this double spreader is, the one of the simple spreaders, coinciding with the longitudinal axis of the boom that supports the trolley that maneuvers it. This disposition applies to the previously described ship-to-shore gantry cranes, with one or several independent booms or with one or several booms with one or more independent trolleys from each one of which hang double spreaders, always taking into account the necessary clearances, either for reasons of safety, logistics or of any other nature, between containers of contiguous double spreaders and between container - leg of the crane and optimizing as much as possible these clearances with regard to minimizing the movement of the crane along the quay in the operations of loading and unloading. In the case of spreaders to maneuver three or more containers the reasoning is equivalent. The means of transport to be positioned under the crane must have adequate dimensions to be able to move two or more standardized containers all at once.

The procedure for loading and unloading of standardized containers to be applied to the previously described ship-to-shore gantry cranes can have a variant characterized in that an intermediate step exists by which the standardized container is unloaded on an independent frame (or loaded from that frame, in the inverse operation) located under the crane, instead of being directly unloaded on the means of transport (or loaded from that means of transport, in the inverse operation); this lower frame, that may or may not be attached to the gantry crane, is served by one or more independent with each other and parallel to the quay overhead cranes; these overhead cranes are mounted on lower horizontal beams perpendicular to the quay, beams that are each connected at their ends to the two lower horizontal beams of the frame of the gantry crane that are parallel to the quay; these overhead cranes move orthogonally to the quay each with a lower trolley, attached to it, equipped with another spreader which in turn is coupled, by fixing it, to the standardized container located in the lower frame to move it and load it (or unload it in the inverse operation) in the means of transport of standardized containers; with this the typical cycle of the ship-to-shore gantry crane is simplified.

### Brief Description of the Drawings

To complement the description that is being made and in order to help for a better understanding of the characteristics of the invention, it is included as an integral part of said description a set of drawings in which, with illustrative and not limiting character, the following has been presented:
Figures 1a and 1b.- They show in plan, elevation and cross section the difference between the arrangement of standardized containers in a current container ship (1a) and a container ship according to the first invention related to the procedure (1b)
Figure 1c.- It shows in plan and elevation a container ship according to the first invention related to the procedure with bays of 6 rows (1c).
Figure 2.- It shows in plan a detail of the front area of the container ship according to the first invention related to the procedure.
Figure 3.- It shows the longitudinal and transversal elevations of the ship-to-shore gantry crane, according to the second invention related to the procedure, with which the transfer procedure of standardized containers will be presented.
Figures 4a and 4b.- They show, respectively, longitudinal and transversal elevations of the set quay, container ship with bays of 8 rows and ship-to-shore gantry cranes of single boom with two independent trolleys.
Figures 5a and 5b.- They show, respectively, longitudinal elevations of a container ship with bays of 6 rows and ship-to-shore gantry cranes of single boom with three independent trolleys and of a container ship with bays of 6 rows and ship-to-shore gantry cranes of single boom with two independent trolleys.
Figures 6a, 6b, 6c, 6d and 6e.- They show longitudinal elevations of some of the different embodiments of ship-to-shore gantry cranes according to the second invention related to the procedure and with which the same can be performed.
   (1) Standardized container
   (1a) Current container ship with longitudinal arrangement of standardized containers
   (1b) Container ship with transversal arrangement of standardized containers and bays of 5 rows
   (1c) Container ship with transversal arrangement of standardized containers and bays of 6 rows
   (1d) Container ship with transversal arrangement of standardized containers and bays of 8 rows
   (2) Bay or hold
   (3) Transverse bulkhead
   (4) Secondary longitudinal bulkhead
   (5) Side of the hull
   (6) Vertical cell guide
   (7a) Ship-to-shore gantry crane of two independent booms with a trolley each
   (7b) Ship-to-shore gantry crane of singe boom with two independent trolleys
   (7c) Ship-to-shore gantry crane of single boom with three independent trolleys
   (8) Independent boom
   (9) Single boom
   (10) Trolley
   (11) Frame
   (12) Rail
   (13) Front legs
   (14) Rear legs
   (15) Standardized container clamping mechanism (spreader)
   (16) Quay
   (17) Means of transport
   (18) Lower frame
   (19) Overhead crane
   (20) Lower horizontal beam perpendicular to the quay
   (21) Lower horizontal beam of the frame of the ship-to-shore gantry crane that is parallel to the quay
   (22) Lower trolley

### Best Way to carry out the Invention

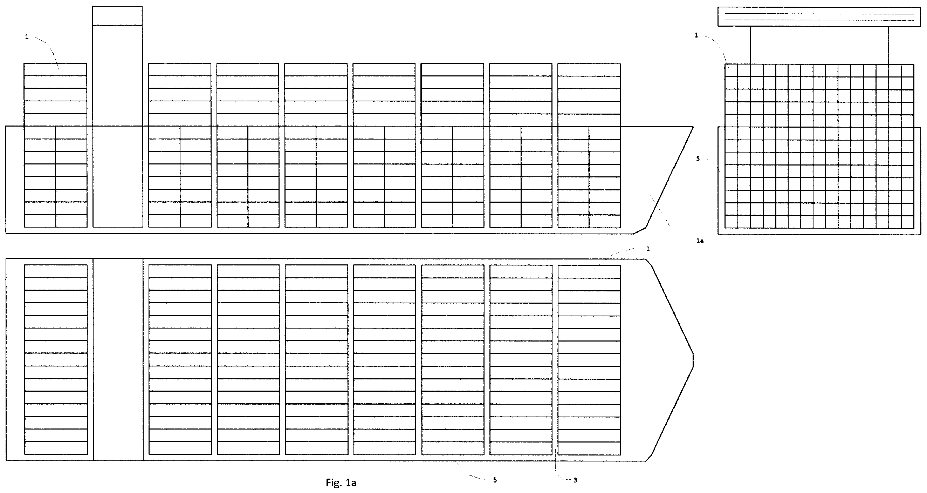

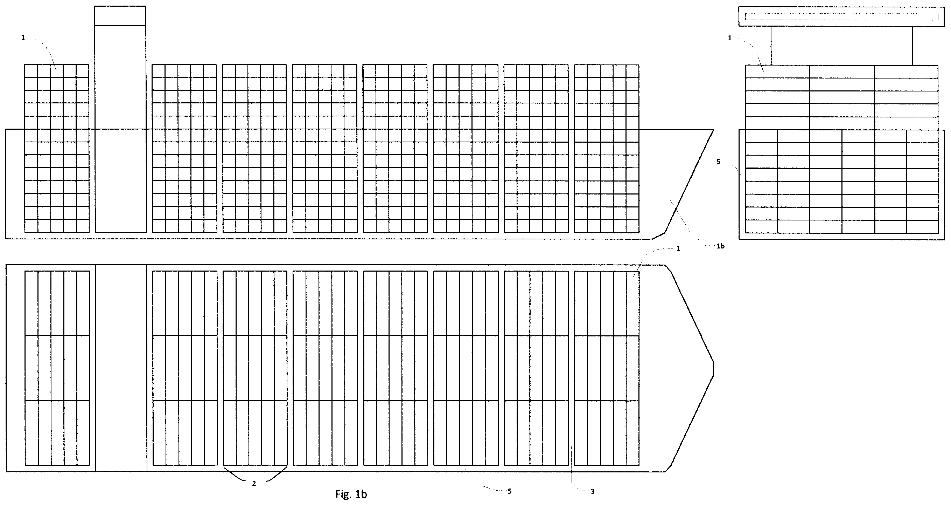

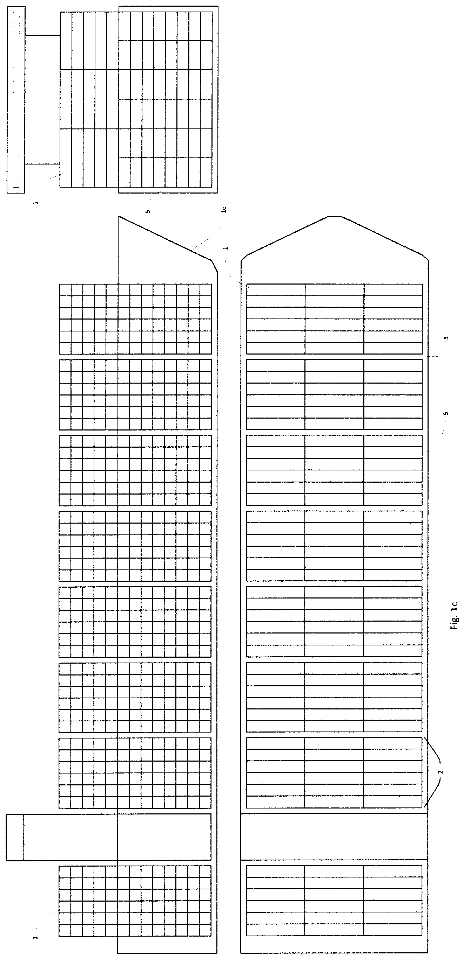

In Figures 1a and 1b They show in plan, elevation and cross section the differences between the arrangement of standardized containers in a current container ship (1a), with arrangement of the standardized containers (1) with their longitudinal axes parallel to the longitudinal axis of the ship (arranged longitudinally), and a container ship (1b), according to the first invention related to the procedure, with arrangement of the standardized containers (1) with their longitudinal axes orthogonal to the longitudinal axis of the ship (arranged transversely). The number of rows of standardized containers (1) arranged transversely in each bay (2) is variable; in Figure 1b, the container ship (1b) has bays (2) of 5 rows of containers. As an example of other arrangements, in Figure 1c a container ship (1c) that has bays (2) of 6 rows is shown.

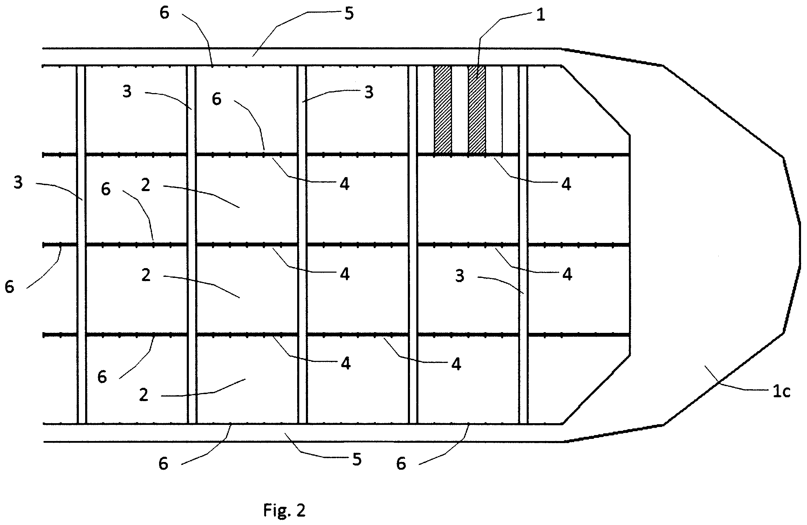

In Figure 2 it is shown in plan a detail of the prow and of the front adjacent area of a container ship (1c), with bays (2) of 6 rows, where are observed the sides of the hull (5) and the transverse bulkheads (3); these transverse bulkheads (3) are separated by a distance so that between them fit a whole number of standardized containers (1) with their longitudinal axes parallel to said transverse bulkheads (3); likewise, they are observed in Figure 2 the secondary longitudinal bulkheads (4) with which they are subdivided the holds (2) formed by the transverse bulkheads and the sides of the hull (5); these secondary longitudinal bulkheads (4) are separated with each other by a distance so that between them fits a standardized container (1) with its longitudinal axis orthogonal to said secondary longitudinal bulkheads (4). On the inside of the sides of the hull (5) and on both sides of the secondary longitudinal bulkheads (4) vertical cell guides (6) are mounted that facilitate the positioning and allow to arrange the standardized containers (1) stacked and with their longitudinal axes perpendicular to the longitudinal axis of the ship.

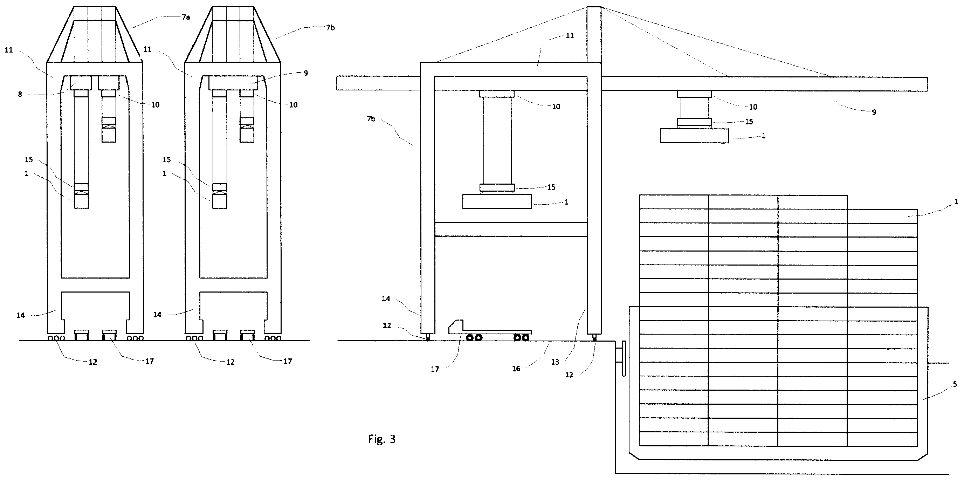

In Figure 3 they are shown the longitudinal and transversal elevations of the ship-to-shore gantry crane, according to the second invention related to the procedure, with which the transfer procedure of standardized containers will be presented. Specifically, in the longitudinal elevation it is shown a gantry crane in a first version (7a) of two independent booms (8) with a trolley (10) each and in a second version (7b) of single boom (9) with two independent trolleys (10). This ship-to-shore gantry crane in the first version (7a) consists of a frame (11) that is supported by four legs with sets of support and rolling on rail (12) wheels, two front legs (13) on a front rail and two rear legs (14) on a rear rail, allowing the movement along the quay; said frame (11) has a gap between each pair of legs of the same rail such that it allows the placement of two independent booms (8) perpendicular to the quay, supported by the upper part of the frame (11) and located in the gap formed between each pair of front legs (13) and rear ones (14); these independent booms (8) support each a trolley (10) that moves longitudinally under it forward and backward and from which hangs in turn by means of cables a container clamping mechanism (spreader) (15) equipped with vertical movement , according to needs, thanks to lifting and lowering means located on the trolley (10); the spreader (15) is arranged such that its longitudinal axis coincides with the longitudinal axis of the independent boom (8), in this way the standardized containers (1) are loaded, moved and unloaded with their longitudinal axis perpendicular to the edge of the quay at all times. In the second version (7b) the two independent booms (8) are replaced by a single boom (9) perpendicular to the quay, supported by the upper part of the frame (11) and located in the opening formed between each pair of front legs (13) and rear ones (14); this single boom (9) has a suitable width to allow the support of two independent with each other trolleys (10) and which move longitudinally under it forward and backward.

In the transverse elevation of Figure 3, valid for the two versions (7a) and (7b), it is observed that the trolleys (10), independent with each other, are in a certain position along the independent boom (8) of each or the single boom (9) of both, always according to version, and that the spreaders (15), each with a standardized container (1) with its longitudinal axis orthogonal to the edge of the quay, are at different heights.

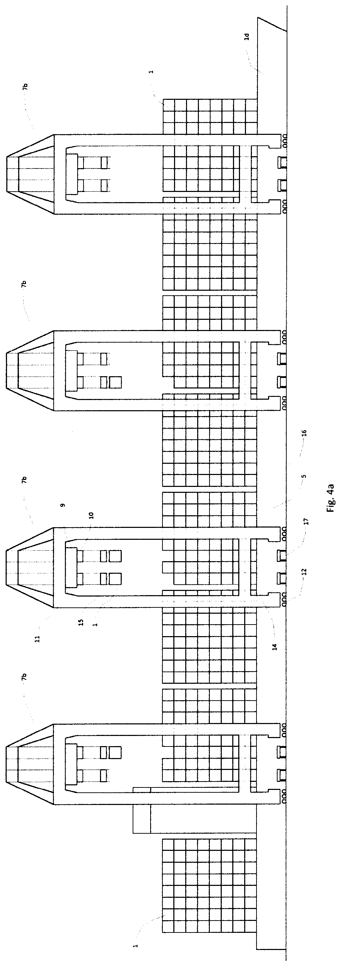

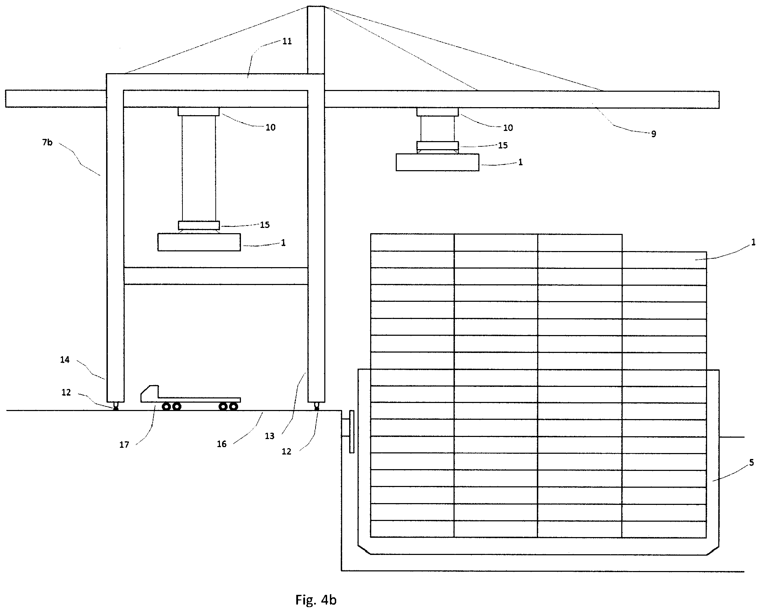

In Figures 4a and 4b they are shown, respectively, longitudinal and transversal elevations of the set quay (16), container ship (1d) with bays (2) of 8 rows and ship-to-shore gantry cranes (7b) of single boom (9) with two independent trolleys (10); based on these elevations an embodiment of the loading / unloading procedure of standardized containers (1) is presented below:
Unloading of standardized containers (1) from a container ship (1d) to the quay (16) that comprises the following steps:
- Berthing of container ship (1d) with transversal arrangement of the standardized containers (1) inside and outside the holds and with bays (2) of 8 rows.
- Positioning on the edge of the quay (16) of ship-to-shore gantry crane (7b) of single boom (9) with two independent trolleys (10) and each capable of maneuvering these standardized containers (1) by means of a spreader (15) whose longitudinal axis coincide in direction with the longitudinal axis of the standardized containers (1) (both axes orthogonal to the quay (16)).
- Forward movement of the trolley (10) under the boom (9) of the crane (7b), with the spreader (15) elevated, until being positioned on the standardized container (1) to be moved located on the container ship (1d).
- With the lifting and lowering means located on the trolley (10), maneuver of descent of the spreader (15) until it is fixed and secured to the standardized container (1).
- Maneuver of ascent of the spreader (15) - standardized container (1) set and subsequent backwards movement of the trolley (10) under the boom (9), passing between the front legs (13) of the crane (7b), until being positioned on the means of transport (17) previously located under the crane (7b) in orthogonal position to the quay (16).
- With the lifting and lowering means located on the trolley (10), maneuver of descent of the spreader (15) - standardized container (1) set until having the standardized container (1) resting on the means of transport (17) and fixed on the same; disconnection of the spreader (15) fixings on the standardized container (1).
- Maneuver of ascent of the empty spreader (15) and forward movement of the trolley (10) under the boom (9) passing between the front legs (13) of the crane (7b) until it is positioned, with the spreader (15) elevated, on a new standardized container (1) to be transferred, located in the container ship (1d), to start the cycle again.

Loading of standardized containers (1) from the quay (16) to a container ship (1d) that comprises the following steps:
- Berthing of container ship (1d) with transversal arrangement of the standardized containers (1) inside and outside the holds and with bays (2) of 8 rows.
- Positioning on the edge of the quay (16) of ship-to-shore gantry crane (7b) of single boom (9) with two independent trolleys (10) and each capable of maneuvering these standardized containers (1) by means of a spreader (15) whose longitudinal axis coincide in direction with the longitudinal axis of the standardized containers (1) (both axes orthogonal to the quay (16)).
- Positioning on the edge of the quay (16), under the crane (7b) and in position orthogonal to the quay of the means of transport (17) loaded with the standardized container (1) to be loaded in the container ship (1d).
- Movement of the trolley (10) under the boom (9) of the crane (7b) until it is positioned, with the spreader (15) elevated, on the means of transport (17) - standardized container (1) set.
- With the lifting and lowering means located on the trolley (10), maneuver of descent of the spreader (15) until it is fixed and secured to the standardized container (1); release of the fixings of the standardized container (1) with the means of transport (17).
- Maneuver of ascent of the spreader (15) - standardized container (1) set and subsequent forward movement of the trolley (10) under the boom (9), passing between the front legs (13) of the crane (7b), until being positioned on the corresponding cell in the container ship (1d).
- With the located on the trolley (10) lifting and lowering means, maneuver of descent of the spreader (15) - standardized container (1) set using the vertical cell guides (6) of the container ship (1d) until leaving the standardized container (1) in its final position, now on another standardized container (1) already placed, already on the bottom of the hold; subsequent disconnection of the spreader (15) fixings on the standardized container (1) and fastening of the standardized container (1) in the container ship (1d) with stowage elements.
- Maneuver of ascent of the empty spreader (15) and subsequent backwards movement of the trolley (10) under the boom (9), passing between the front legs (13) of the crane (7b) until it is positioned, with the spreader (15) elevated, on a new means of transport (17) - standardized container (1) set to start the cycle again.

In the configuration of the embodiment of the loading / unloading procedure of standardized containers (1) shown in figures 4a and 4b it is observed how the existing separation between legs on the same rail (13) (14) has been adjusted in such a way that the movement of the crane (7b) along the quay (16) is minimized in the operations of loading and unloading; specifically in this case, the necessary clearances between standardized container (1) - standardized container (1) have been adjusted so that the crane (7b) can operate in each bay (2) of the container ship (1d) with the minimum movements along the edge of the quay (16); it is observed that, when the bays (2) have eight rows of standardized containers (1) each, a crane (7b) can operate with the 1^{st} and 3^{rd} rows to pass later to the 2^{nd} and 4^{th}, later 5^{th} and 7^{th} and, finally 6^{th} and 8^{th} rows with minimal movements as has been mentioned.

In addition, in Figures 4a and 4b it is supposed that each of the four ship-to-shore gantry cranes (7b) that belong to it serve two bays (2) of 8 rows of standardized containers (1) each; nevertheless, it is observed in said Figure 4a that twice as many ship-to-shore gantry cranes (7b) (eight) fit perfectly by which each of them would serve a single bay (2), doubling the loading / unloading performance for that container ship (1d).

The loading/unloading of standardized containers (1) performance for the shown in Figures 4a and 4b arrangement is significantly greater than if current gantry cranes were used with container ships (1a) with longitudinal arrangement of the containers and of equal number of TEUs. This is because, for the same length and number of TEUs, a larger number of cranes can be arranged each operating with twice as many containers as a current gantry crane.

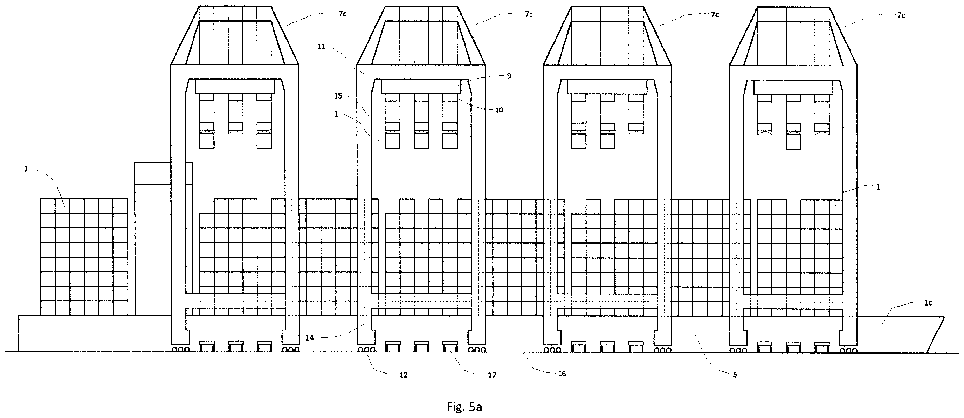

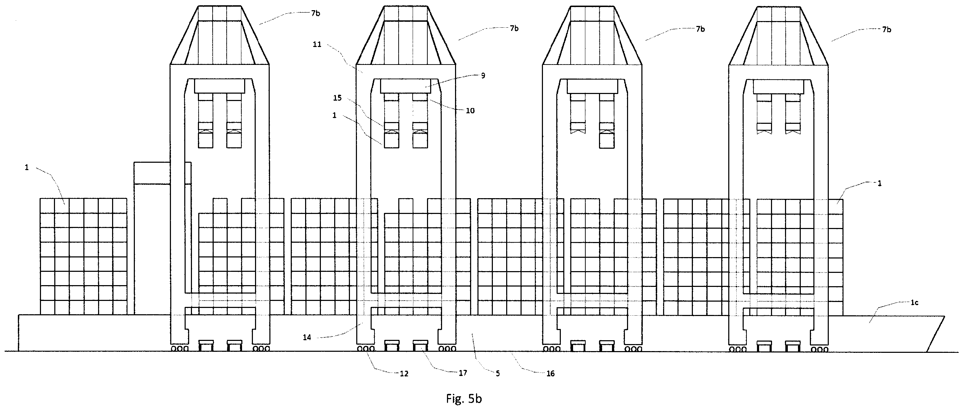

In Figures 5a and 5b they are shown, respectively, longitudinal elevations of two other embodiments of the procedure of unloading/loading of standardized containers (1); one of a container ship with bays of 6 rows and ship-to-shore gantry cranes of single boom with three independent trolleys and another of a container ship with bays of 6 rows and ship-to-shore gantry cranes of single boom with two independent trolleys.

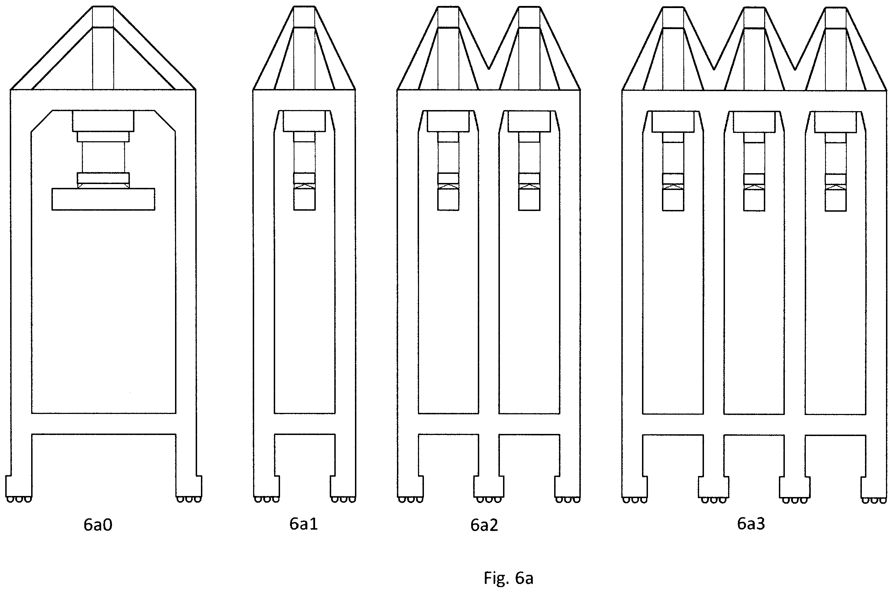

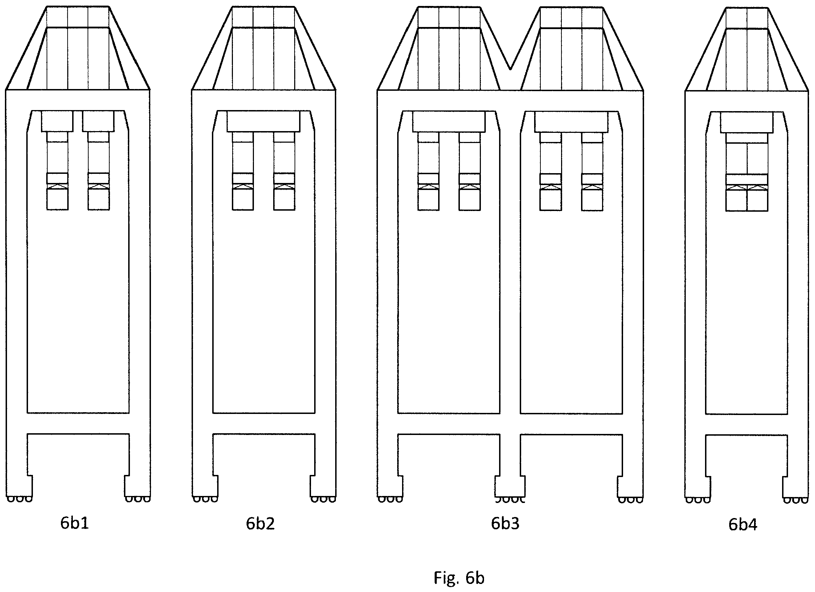

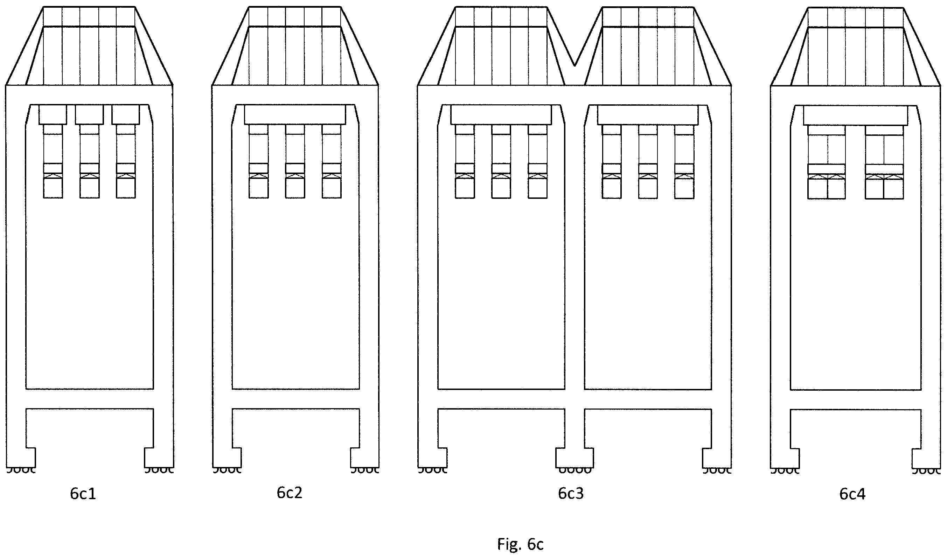

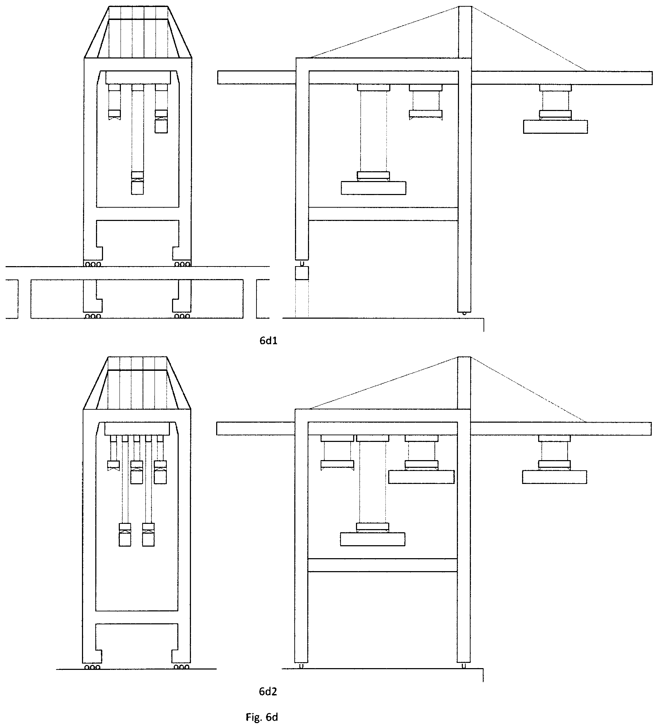

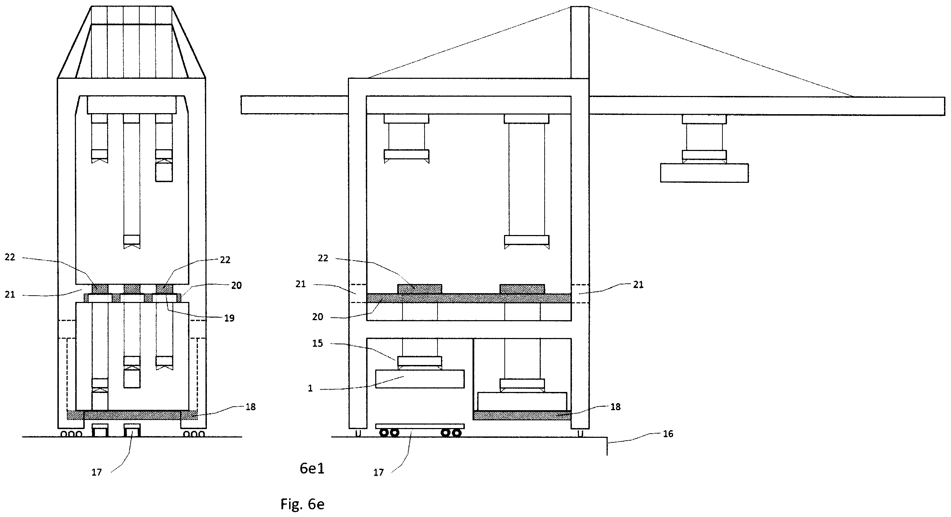

In Figures 6a, 6b, 6c, 6d and 6e they are shown longitudinal elevations of some (not all) of the different embodiments of ship-to-shore gantry cranes according to the second invention related to the procedure and with which the same can be performed: individual crane of an independent boom (6a1), composition of two individual cranes of an independent boom (6a2), composition of three individual cranes of an independent boom (6a3), individual crane of two independent booms (6b1), individual crane of a boom with two independent trolleys (6b2), composition of two individual cranes of a boom with two independent trolleys (6b3), individual crane of an independent boom with a trolley of adequate dimensions to maneuver a double spreader (6b4), individual crane of three independent booms (6c1), individual crane of a boom with three independent trolleys (6c2), composition of two individual cranes of a boom with three independent trolleys (6c3), individual crane of a boom with two independent trolleys of adequate dimensions to maneuver each a double spreader (6c4), individual crane with rear legs on loading beam (6d1), individual crane in which the gaps between container - container are non-existent (6d2) and individual crane with lower frame under it and lower trolleys (6e1). In Figure 6a it is shown, in addition, a current ship-to-shore gantry crane (6a0) to serve as a contrast.

## Claims

1. Container ship **characterized in that** all or part of the standardized containers (1) are arranged transversely, that is to say, with their longitudinal axes perpendicular to the longitudinal axis of the ship, both in the holds (2) of the ship and in the outer area on said holds (2); for this the holds (2) where they are stored are formed by transverse bulkheads (3) orthogonal to the longitudinal axis of the ship, transverse bulkheads (3) that can contribute to the structural resistance of said ship and with a separation between these transverse bulkheads (3) such as to allow the placement of a whole number of standardized containers (1) arranged transversely; in addition, **characterized in that** each one of these holds between transverse bulkheads (3) in turn is subdivided by secondary longitudinal bulkheads (4) separated from each other by the length of a standardized container (1) plus the necessary clearances and **in that** on both sides of these secondary longitudinal bulkheads (4) and on the inside of the sides of the hull (5), sides that close the hold (2), vertical cell guides (6) are installed so as to allow to arrange the placement of the standardized containers (1) stacked and with their longitudinal axis perpendicular to the longitudinal axis of the ship.

2. Adaptation of existing container ships according to claim 1, **characterized in that** all or part of the holds (2) formed by the existing transverse bulkheads (3) are subdivided by secondary longitudinal bulkheads (4) separated from each other by the length of a standardized container (1) plus the necessary clearances; in addition, **characterized by** the disassembly of the vertical cell guides (6) that exist in the transverse bulkheads and by the installation of vertical cell guides (6) on both sides of the new secondary longitudinal bulkheads (4) and on the inside of the sides of the hull (5) so that standardized containers (1) can be arranged in the thus formed cells with their longitudinal axis perpendicular to the longitudinal axis of the ship.

3. Container ship of new construction or existing according to claims 1 or 2 **characterized in that** the vertical cell guides (6) are extended outside the holds (2) and above them, because said vertical cell guides (6) are installed on longitudinal frames of suitable rigidity in vertical extension of the secondary longitudinal bulkheads (4) and of the sides of the hull (5) and **in that** with the help of closing transverse frames of suitable rigidity in vertical extension of the transverse bulkheads (3) constitute a cellular structure, exterior to the holds (2), where standardized containers (1) can be arranged in the thus formed cells with the same arrangement as those located in said holds (2), that is to say, with their longitudinal axes perpendicular to the longitudinal axis of the ship. In an existing container ship with transverse frames, these transverse frames can be adapted to the new arrangement of standardized containers (1) by disassembling the vertical cell guides (6) installed in them.

4. Container ship of new construction or existing according to claims 1, 2 or 3 **characterized in that** for the stowage of the standardized containers (1), already in all or in part of the loading areas of the ship, vertical cell guides (6) are not used but, in those areas without vertical cell guides (6), the stowage is done by the lashing of the standardized containers (1).

5. Adaptation according to claims 1, 2, 3 or 4 of merchant ships in general **characterized in that** all or part of their holds (2) and/or of the outer areas on them are adjusted for the stowage of standardized containers (1) arranged transversely, with their longitudinal axes perpendicular to the longitudinal axis of the ship.

6. Ship-to-shore gantry crane for loading and unloading of standardized containers (1), supported by four legs with rolling mechanisms (sets of support wheels), two front legs (13) on a front rail (12) and two rear legs (14) on a rear rail (12), allowing the movement along the quay (16), gantry crane that in turn has a boom (8) perpendicular to the quay (16) located in the opening formed between the legs and supported by the gantry, boom (8) that supports a trolley (10) that moves longitudinally under it and from which hangs in turn by means of cables a container clamping mechanism (spreader) (15) equipped with vertical movement, according to needs, thanks to lifting and lowering means located on the trolley (10), **characterized in that** the spreader (15) is arranged so that its longitudinal axis coincides with the longitudinal axis of the boom (8) so that the standardized containers (1) are loaded and unloaded with their longitudinal axis perpendicular to the edge of the quay (16) which allows that the existing separation between legs on the same rail (12) can be reduced adjusting it in such a way that, without endangering the stability of the gantry crane, is at least the width of a standardized container (1) plus the necessary clearances, either for reasons of safety, logistics or of any other nature, between standardized container (1) and legs, allowing the passage between the legs of a standardized container (1) breadthways.

7. Ship-to-shore gantry crane according to claim 6 **characterized in that** the frame of the crane results from the composition of two individual frames, **in that** is supported by six legs with rolling mechanisms (sets of support wheels), three front legs (13) on a front rail (12) and three rear legs (14) on a rear rail (12), allowing the movement along the quay (16), and **in that** it has a total width such that it allows the placement of two independent booms (8) perpendicular to the quay (16), supported by the gantry and located in the two openings formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of a standardized container (1) (a standardized container (1) breadthways) with the necessary clearances, either for reasons of safety, logistics or of any other nature, between standardized container (1) and legs.

8. Ship-to-shore gantry crane according to claim 6 **characterized in that** the frame of the crane is supported by four legs with rolling mechanisms (sets of support wheels), two front legs (13) on a front rail (12) and two rear legs (14) on a rear rail (12), allowing the movement along the quay (16), and **in that** said frame has a gap between legs of the same rail (12) such that it allows the placement of two independent booms (8) perpendicular to the quay, supported by the gantry and located in the gap formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of two standardized containers (1) (two standardized containers (1) breadthways) with the necessary clearances, either for reasons of safety, logistics or of any other nature, between standardized container (1) - standardized container (1) and between standardized container (1) - leg.

9. Ship-to-shore gantry crane according to claim 6 **characterized in that** the frame of the crane results from the composition of three or more individual frames, **in that** it is supported by four or more pairs of legs with rolling mechanisms (sets of support wheels), four or more front legs (13) on a front rail (12) and four or more rear legs (14) on a rear rail (12), allowing the movement along the quay (16), and **in that** has a total width such that it allows the placement of three or more independent booms (8) perpendicular to the quay (16), supported by the gantry and located in the three or more openings formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between each pair of legs on the same rail (12) can be reduced adjusting it in such a way that, without endangering the stability of the gantry crane and optimizing as much as possible that adjustment with regard to minimize the movement of the crane along the quay (16) in the operations of loading and unloading, allows the passage between each pair of legs of the width of a standardized container (1) (a standardized container (1) breadthways) with the necessary clearances, either for reasons of safety, logistics or of any other nature, between standardized container (1) and legs.

10. Ship-to-shore gantry crane according to claim 6 **characterized in that** the frame of the crane is supported by four legs with rolling mechanisms (sets of support wheels), two front legs (13) on a front rail (12) and two rear legs (14) on a rear rail (12), allowing the movement along the quay (16), and **in that** said frame has a gap between legs of the same rail (12) such that it allows the placement of three or more independent booms (8) perpendicular to the quay (16), supported by the gantry and located in the gap formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

11. Ship-to-shore gantry crane according to claim 8 **characterized in that** the two independent booms (8) are replaced by a single boom (9) perpendicular to the quay (16), supported by the gantry and located in the opening formed between the legs, single boom (9) of a suitable width to allow the support of two independent with each other trolleys (10) and which move longitudinally under it; from each one of the trolleys (10) hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the single boom (9) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing that adjustment with regard to minimize as much as possible the movement of the crane along the quay (16) in the operations of loading and unloading, allows the passage between the legs of the width of two standardized containers (1) (two standardized containers (1) breadthways) with the necessary clearances, either for reasons of safety, logistics or of any other nature, between standardized container (1) - standardized container (1) and between standardized container (1) - leg.

12. Ship-to-shore gantry crane according to claim 10 **characterized in that** the three or more independent booms (8) are replaced by a single boom (9) or a smaller number (divisor normally) of them perpendicular to the quay (16), supported by the gantry and located in the gap formed between the legs, boom/s (9) of a suitable width to allow the support of two, three or more independent with each other trolleys (10) and which move longitudinally under them; from each one of the trolleys (10) hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the boom (9) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

13. Ship-to-shore gantry crane **characterized in that** results from the composition of two or more gantry cranes according to claims 8 or 11, the set being supported by three or more pairs of legs with rolling mechanisms (sets of support wheels), three or more front legs (13) on a front rail (12) and three or more rear legs (14) on a rear rail (12), allowing the movement along the quay (16), and **in that** has a total width such that it allows the placement of two or more pairs of independent booms (8) (according to claim 8), or two or more booms (9) with two independent trolleys (10) each (according to claim 11), booms all perpendicular to the quay (16), supported by the gantry and located in the two or more openings formed between the legs, booms that support trolleys (10) that move longitudinally under them and from each one of them hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the booms so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of two standardized containers (1) (two standardized containers (1) breadthways) with the necessary clearances, either for reasons of safety, logistics or of any other nature, between standardized container (1) - standardized container (1) and between standardized container (1) - leg.

14. Ship-to-shore gantry crane **characterized in that** results from the composition of two or more cranes according to claims 10 or 12, the set being supported by three or more pairs of legs with rolling mechanisms (sets of support wheels), three or more front legs (13) on a front rail (12) and three or more rear legs (14) on a rear rail (12), allowing the movement along the quay (16), and **in that** has a total width such that it allows the placement of two or more groups of three or more independent booms (8) each (claim 10), or two or more groups of a single boom (9) or of a smaller number (divisor normally) of the number of independent booms (8), with two, three or more trolleys (10) independent with each other under them (according to claim 12), booms all perpendicular to the quay (16), supported by the gantry and located in the two or more openings formed between the legs, booms that support trolleys (10) that move longitudinally under them and from each one of them hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the boom so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

15. Ship-to-shore gantry crane according to any of the claims 8, 10, 11, 12, 13 or 14, **characterized in that** the gaps between standardized container (1) - standardized container (1) are non-existent, which allows to operate with standardized containers (1) adjacent in the ship provided that the crossing at the level between them is avoided, both vertically and horizontally, during the loading - unloading operations.

16. Ship-to-shore gantry crane according to any of the claims 6, 7, 8, 9, 10, 11, 12, 13, 14 or 15, **characterized in that** the rear rail (12) on which the rear legs (14) of the crane are supported is arranged, along the quay (16), on an elevated loading beam over the working area, supported on pillars of a sufficient height that allows the passage of the transport means (17) of standardized containers (1) under it and with a spacing between said pillars such that is considerably greater than the distance between rear legs (14) of the crane, achieving in this way a more clear crossing area and facilitating, therefore, the maneuver of moving the standardized containers (1) from the operation area to the storage area and vice versa as well as the placement under the crane of said transport means (17); the rear legs (14) of the cranes with their rolling mechanisms (sets of support wheels), when resting on that elevated rail (12), are shorter than the front legs (13).

17. Ship-to-shore gantry crane according to any of the claims 6, 7, 8, 9, 10, 11, 12, 13, 14, 15 or 16 **characterized in that** the boom or booms with their corresponding trolleys (10) are adapted for the use of multiple spreaders capable to maneuver all at once two or more standardized containers (1) contiguous in width (with the sides adjacent lengthways). In the case of a double spreader, this is identical in length to the simple spreaders but twice as wide; the longitudinal axis of this double spreader is, like that of the simple spreaders, coinciding with the longitudinal axis of the boom that supports the trolley (10) that maneuvers it. This disposition applies to the previously described ship-to-shore gantry cranes, with one or several independent booms (8) or with one or several booms (9) each of them with two or more independent trolleys (10) from each one of which hang double spreaders, always taking into account the necessary clearances, either for reasons of safety, logistics or of any other nature, between standardized containers (1) of contiguous double spreaders and between standardized container (1) - leg of the crane and optimizing as much as possible these clearances with regard to minimize the movement of the crane along the quay in the operations of loading and unloading. For the case of spreaders for maneuvering three or more standardized containers (1) the reasoning is equivalent.

18. Ship-to-shore gantry crane according to any of the claims 6, 7, 8, 9, 10, 11, 12, 13, 14, 15, 16 or 17 **characterized in that** the standardized container (1) is moved by the movement of the trolley (10) and of the spreader (15) from the ship to a lower frame (18), located under the crane and on which it is deposited; this lower frame (18), that may or may not be attached to the gantry crane, is served by one or more, independent with each other and parallel to the quay (16), overhead cranes (19); these overhead cranes (19) are mounted on lower horizontal beams (20) perpendicular to the quay (16), beams that are each connected at their ends to the two lower horizontal beams of the frame of the gantry crane (21) that are parallel to the quay (16); these overhead cranes (19) move orthogonally to the quay (16) each with a lower trolley (22), attached to it, equipped with another spreader (15) which in turn is coupled, by fixing it, to the standardized container (1) located in the lower frame (18) to move it and load it (or unload it in the inverse operation) in the means of transport (17) of standardized containers (1); with this the typical cycle of the ship-to-shore gantry crane is simplified.

19. Procedure for unloading of standardized containers (1) from a container ship, or other type of ship, to a quay (16) according to any of claims 1, 2, 3, 4 or 5 by means of ship-to-shore gantry cranes according to any of claims 6, 7, 8, 9, 10, 11, 12, 13, 14, 15 or 16 **characterized in that** it comprises the following steps:
- Berthing of container ship with transversal arrangement of the standardized containers (1) inside and outside the holds.
- Positioning on the edge of the quay (16) of ship-to-shore gantry crane with trolley (10) or independent trolleys with capacity to maneuver these standardized containers (1) by means of a spreader (15) whose longitudinal axis coincides in direction with the longitudinal axis of the standardized containers (1) (both axes orthogonal to the quay (16)).
- Forward movement of the trolley (10) under the boom of the crane, with the spreader (15) elevated, until being positioned on the standardized container (1) to be moved located on the container ship.
- With the lifting and lowering means located on the trolley (10), maneuver of descent of the spreader (15) until it is fixed and secured to the standardized container (1).
- Maneuver of ascent of the spreader (15) - standardized container (1) set and subsequent backwards movement of the trolley (10) under the boom, passing between the legs of the crane, until being positioned on the means of transport (17) previously located under the crane in orthogonal position to the quay (16).
- With the lifting and lowering means located on the trolley (10), maneuver of descent of the spreader (15) - standardized container (1) set until having the standardized container (1) resting on the means of transport (17) and fixed on the same; disconnection of the spreader (15) fixings on the standardized container (1).
- Maneuver of ascent of the empty spreader (15) and forward movement of the trolley (10) under the boom of the crane, with the spreader (15) elevated, until being positioned on a new standardized container (1) to be transferred, located in the container ship, to start again the cycle.

20. Procedure for loading of standardized containers (1) from a quay (16) to a container ship, or to other type of ship, according to any of claims 1,2, 3, 4 or 5 by means of ship-to-shore gantry cranes according to any of claims 6, 7, 8, 9, 10, 11, 12, 13, 14, 15 or 16 **characterized in that** it comprises the following steps:
- Berthing of container ship with transversal arrangement of the standardized containers (1) inside and outside the holds.
- Positioning on the edge of the quay (16) of ship-to-shore gantry crane with trolley (10) or independent trolleys with capacity to maneuver these standardized containers (1) by means of a spreader (15) whose longitudinal axis coincides in direction with the longitudinal axis of the standardized containers (1) (both axes orthogonal to the quay (16)).
- Positioning on the edge of the quay (16), under the crane and in orthogonal position to the quay (16) of the means of transport (17) with the standardized container (1) to be loaded in the container ship.
- Movement of the trolley (10) under the boom of the crane until it is positioned, with the spreader (15) elevated, on the means of transport (17) - standardized container (1) set.
- With the lifting and lowering means located on the trolley (10), maneuver of descent of the spreader (15) until it is fixed and secured to the standardized container (1); release of the fixings of the standardized container (1) with the means of transport (17).
- Maneuver of ascent of the spreader (15) - standardized container (1) set and subsequent forward movement of the trolley (10) under the boom, passing between the legs of the crane, until being positioned on the corresponding cell in the container ship.
- With the lifting and lowering means located on the trolley (10), maneuver of descent of the spreader (15) - standardized container (1) set using the vertical cell guides (6) of the container ship until leaving the standardized container (1) in its final position, now on another standardized container (1) already placed, already on the bottom of the hold; subsequent disconnection of the spreader (15) fixings on the standardized container (1) and fixing of the standardized container (1) in the container ship with stowage elements.
- Maneuver of ascent of the empty spreader (15) and subsequent backwards movement of the trolley (10) under the boom, passing between the legs of the crane, until it is positioned, with the spreader (15) elevated, on a new means of transport (17) - standardized container (1) set to start again the cycle.

21. Procedure for loading and unloading of standardized containers (1) according to claims 19 and 20 by means of ship-to-shore gantry cranes according to claim 17 **characterized in that** the different steps are conducted with the use of a multiple spreader for maneuvering two or more standardized containers (1) all at once (standardized containers (1) with the long sides adjacent) and **in that** the means of transport (17) to be positioned under the crane must have adequate dimensions to be able to move two or more standardized containers (1) all at once, according to the number of standardized containers (1) the spreader is capable to maneuver.

22. Procedure for loading and unloading of standardized containers (1) according to claims 19, 20 or 21 by means of ship-to-shore gantry cranes according to claim 18 **characterized in that** an intermediate step exists by which the standardized container/s (1) is/are unloaded on a lower frame (18) (or loaded from that lower frame (18), in the inverse operation) located under the crane, instead of being directly unloaded on the means of transport (17) (or loaded from that means of transport (17), in the inverse operation); this lower frame (18), that may or may not be attached to the gantry crane, is served by one or more independent between them and parallel to the quay (16) overhead cranes (19); these overhead cranes (19) are mounted on lower horizontal beams (20) perpendicular to the quay (16), lower horizontal beams (20) that are united each by their ends to the two lower horizontal beams (21) of the frame of the gantry crane that are parallel to the quay (16); these overhead cranes (19) move orthogonally to the quay (16) along the lower horizontal beams (20) and each has a lower trolley (22), attached to it, equipped with another spreader, simple or multiple, which in turn is coupled, by fixing it, to the standardized container/s (1) located in the lower frame (18) to transfer it/them and load it/them (or unload it/them in the inverse operation) in the means of transport (17) of standardized containers (1); with this the typical cycle of the ship-to-shore gantry crane is simplified.

## Amended claims

### Amended claims under Art. 19.1 PCT

**1.** Container ship **characterized in that** all or part of the standardized containers (1) are arranged transversely, that is to say, with their longitudinal axes perpendicular to the longitudinal axis of the ship, both in the holds (2) of the ship and in the outer area on said holds (2); for this the holds (2) where they are stored are formed by transverse bulkheads (3) orthogonal to the longitudinal axis of the ship, transverse bulkheads (3) that can contribute to the structural resistance of said ship and with a separation between these transverse bulkheads (3) such as to allow the placement of a whole number of standardized containers (1) arranged transversely; in addition, **characterized in that** each one of these holds between transverse bulkheads (3) in turn is subdivided by secondary longitudinal bulkheads (4) separated from each other by the length of a standardized container (1) plus the necessary clearances and **in that** on both sides of these secondary longitudinal bulkheads (4) and on the inside of the sides of the hull (5), sides that close the hold (2), vertical cell guides (6) are installed so as to allow to arrange the placement of the standardized containers (1) stacked and with their longitudinal axis perpendicular to the longitudinal axis of the ship.

**2.** Adaptation of existing container ships according to claim 1, **characterized in that** all or part of the holds (2) formed by the existing transverse bulkheads (3) are subdivided by secondary longitudinal bulkheads (4) separated from each other by the length of a standardized container (1) plus the necessary clearances; in addition, **characterized by** the disassembly of the vertical cell guides (6) that exist in the transverse bulkheads and by the installation of vertical cell guides (6) on both sides of the new secondary longitudinal bulkheads (4) and on the inside of the sides of the hull (5) so that standardized containers (1) can be arranged in the thus formed cells with their longitudinal axis perpendicular to the longitudinal axis of the ship.

**3.** Container ship of new construction or existing according to claims 1 or 2 **characterized in that** the vertical cell guides (6) are extended outside the holds (2) and above them, because said vertical cell guides (6) are installed on longitudinal frames of suitable rigidity in vertical extension of the secondary longitudinal bulkheads (4) and of the sides of the hull (5) and **in that** with the help of closing transverse frames of suitable rigidity in vertical extension of the transverse bulkheads (3) constitute a cellular structure, exterior to the holds (2), where standardized containers (1) can be arranged in the thus formed cells with the same arrangement as those located in said holds (2), that is to say, with their longitudinal axes perpendicular to the longitudinal axis of the ship. In an existing container ship with transverse frames, these transverse frames can be adapted to the new arrangement of standardized containers (1) by disassembling the vertical cell guides (6) installed in them.

**4.** Container ship of new construction or existing according to claims 1, 2 or 3 **characterized in that** for the stowage of the standardized containers (1), already in all or in part of the loading areas of the ship, vertical cell guides (6) are not used but, in those areas without vertical cell guides (6), the stowage is done by the lashing of the standardized containers (1).

**5.** Adaptation according to claims 1, 2, 3 or 4 of merchant ships in general **characterized in that** all or part of their holds (2) and/or of the outer areas on them are adjusted for the stowage of standardized containers (1) arranged transversely, with their longitudinal axes perpendicular to the longitudinal axis of the ship.

**6.** Ship-to-shore gantry crane for loading and unloading of standardized containers (1), supported by four legs with rolling mechanisms (sets of support wheels), two front legs (13) on a front rail (12) and two rear legs (14) on a rear rail (12), allowing the movement along the quay (16), gantry crane that in turn has a boom (8) perpendicular to the quay (16) located in the opening formed between the legs and supported by the gantry, boom (8) that supports a trolley (10) that moves longitudinally under it and from which hangs in turn by means of cables a container clamping mechanism (spreader) (15) equipped with vertical movement, according to needs, thanks to lifting and lowering means located on the trolley (10), **characterized in that** the spreader (15) is arranged so that its longitudinal axis coincides with the longitudinal axis of the boom (8) so that the standardized containers (1) are loaded and unloaded with their longitudinal axis perpendicular to the edge of the quay (16) which allows that the existing separation between legs on the same rail (12) can be reduced adjusting it in such a way that, without endangering the stability of the gantry crane, is at least the width of a standardized container (1) plus the necessary clearances, either for reasons of safety, logistics or of any other nature, between standardized container (1) and legs, allowing the passage between the legs of a standardized container (1) breadthways.

**7.** Ship-to-shore gantry crane according to claim 6 **characterized in that** the frame of the crane results from the composition of two individual frames, **in that** is supported by six legs with rolling mechanisms (sets of support wheels), three front legs (13) on a front rail (12) and three rear legs (14) on a rear rail (12), allowing the movement along the quay (16), and **in that** it has a total width such that it allows the placement of two independent booms (8) perpendicular to the quay (16), supported by the gantry and located in the two openings formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of a standardized container (1) (a standardized container (1) breadthways) with the necessary clearances, either for reasons of safety, logistics or of any other nature, between standardized container (1) and legs.

**8.** Ship-to-shore gantry crane according to claim 6 **characterized in that** the frame of the crane is supported by four legs with rolling mechanisms (sets of support wheels), two front legs (13) on a front rail (12) and two rear legs (14) on a rear rail (12), allowing the movement along the quay (16), and **in that** said frame has a gap between legs of the same rail (12) such that it allows the placement of two independent booms (8) perpendicular to the quay, supported by the gantry and located in the gap formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of two standardized containers (1) (two standardized containers (1) breadthways) with the necessary clearances, either for reasons of safety, logistics or of any other nature, between standardized container (1) - standardized container (1) and between standardized container (1) - leg.

**9.** Ship-to-shore gantry crane according to claim 6 **characterized in that** the frame of the crane results from the composition of three or more individual frames, **in that** it is supported by four or more pairs of legs with rolling mechanisms (sets of support wheels), four or more front legs (13) on a front rail (12) and four or more rear legs (14) on a rear rail (12), allowing the movement along the quay (16), and **in that** has a total width such that it allows the placement of three or more independent booms (8) perpendicular to the quay (16), supported by the gantry and located in the three or more openings formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between each pair of legs on the same rail (12) can be reduced adjusting it in such a way that, without endangering the stability of the gantry crane and optimizing as much as possible that adjustment with regard to minimize the movement of the crane along the quay (16) in the operations of loading and unloading, allows the passage between each pair of legs of the width of a standardized container (1) (a standardized container (1) breadthways) with the necessary clearances, either for reasons of safety, logistics or of any other nature, between standardized container (1) and legs.

**10.** Ship-to-shore gantry crane according to claim 6 **characterized in that** the frame of the crane is supported by four legs with rolling mechanisms (sets of support wheels), two front legs (13) on a front rail (12) and two rear legs (14) on a rear rail (12), allowing the movement along the quay (16), and **in that** said frame has a gap between legs of the same rail (12) such that it allows the placement of three or more independent booms (8) perpendicular to the quay (16), supported by the gantry and located in the gap formed between the legs, independent booms (8) that each support a trolley (10) that moves longitudinally under it and from which hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the independent boom (8) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

**11.** Ship-to-shore gantry crane according to claim 8 **characterized in that** the two independent booms (8) are replaced by a single boom (9) perpendicular to the quay (16), supported by the gantry and located in the opening formed between the legs, single boom (9) of a suitable width to allow the support of two independent with each other trolleys (10) and which move longitudinally under it; from each one of the trolleys (10) hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the single boom (9) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing that adjustment with regard to minimize as much as possible the movement of the crane along the quay (16) in the operations of loading and unloading, allows the passage between the legs of the width of two standardized containers (1) (two standardized containers (1) breadthways) with the necessary clearances, either for reasons of safety, logistics or of any other nature, between standardized container (1) - standardized container (1) and between standardized container (1) - leg.

**12.** Ship-to-shore gantry crane according to claim 10 **characterized in that** the three or more independent booms (8) are replaced by a single boom (9) or a smaller number (divisor normally) of them perpendicular to the quay (16), supported by the gantry and located in the gap formed between the legs, boom/s (9) of a suitable width to allow the support of two, three or more independent with each other trolleys (10) and which move longitudinally under them; from each one of the trolleys (10) hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the boom (9) so that the standardized containers (1) are loaded and unloaded with their longitudinal axis perpendicular to the edge of the quay (16), which allows that the existing separation between legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between the legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

**13.** Ship-to-shore gantry crane **characterized in that** results from the composition of two or more gantry cranes according to claims 8 or 11, the set being supported by three or more pairs of legs with rolling mechanisms (sets of support wheels), three or more front legs (13) on a front rail (12) and three or more rear legs (14) on a rear rail (12), allowing the movement along the quay (16), and **in that** has a total width such that it allows the placement of two or more pairs of independent booms (8) (according to claim 8), or two or more booms (9) with two independent trolleys (10) each (according to claim 11), booms all perpendicular to the quay (16), supported by the gantry and located in the two or more openings formed between the legs, booms that support trolleys (10) that move longitudinally under them and from each one of them hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the booms so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of two standardized containers (1) (two standardized containers (1) breadthways) with the necessary clearances, either for reasons of safety, logistics or of any other nature, between standardized container (1) - standardized container (1) and between standardized container (1) - leg.

**14.** Ship-to-shore gantry crane **characterized in that** results from the composition of two or more cranes according to claims 10 or 12, the set being supported by three or more pairs of legs with rolling mechanisms (sets of support wheels), three or more front legs (13) on a front rail (12) and three or more rear legs (14) on a rear rail (12), allowing the movement along the quay (16), and **in that** has a total width such that it allows the placement of two or more groups of three or more independent booms (8) each (claim 10), or two or more groups of a single boom (9) or of a smaller number (divisor normally) of the number of independent booms (8), with two, three or more trolleys (10) independent with each other under them (according to claim 12), booms all perpendicular to the quay (16), supported by the gantry and located in the two or more openings formed between the legs, booms that support trolleys (10) that move longitudinally under them and from each one of them hangs in turn by means of cables a container clamping mechanism (spreader) (15) equipped with vertical movement, according to needs, thanks to lifting and lowering means located on the trolley (10), spreader (15) arranged such that its longitudinal axis coincides with the longitudinal axis of the boom so that the standardized containers (1) are loaded and unloaded with their longitudinal axis perpendicular to the edge of the quay (16), which allows that the existing separation between each pair of legs on the same rail (12) can be reduced adjusting it in such way that, without endangering the stability of the gantry crane and optimizing as much as possible that adjustment with regard to minimize the movement of the crane along the quay (16) in the operations of loading and unloading, allows the passage between each pair of legs of the width of three or more standardized containers (1) (three or more standardized containers (1) breadthways) with the necessary clearances, either for reasons of safety, logistics or of any other nature, between standardized container (1) - standardized container (1) and between standardized container (1) - leg.

**15.** Ship-to-shore gantry crane according to any of the claims 8, 10, 11, 12, 13 or 14, **characterized in that** the gaps between standardized container (1) - standardized container (1) are non-existent, which allows to operate with standardized containers (1) adjacent in the ship provided that the crossing at the level between them is avoided, both vertically and horizontally, during the loading - unloading operations.

**16.** Ship-to-shore gantry crane according to any of the claims 6, 7, 8, 9, 10, 11, 12, 13, 14 or 15, **characterized in that** the rear rail (12) on which the rear legs (14) of the crane are supported is arranged, along the quay (16), on an elevated loading beam over the working area, supported on pillars of a sufficient height that allows the passage of the transport means (17) of standardized containers (1) under it and with a spacing between said pillars such that is considerably greater than the distance between rear legs (14) of the crane, achieving in this way a more clear crossing area and facilitating, therefore, the maneuver of moving the standardized containers (1) from the operation area to the storage area and vice versa as well as the placement under the crane of said transport means (17); the rear legs (14) of the cranes with their rolling mechanisms (sets of support wheels), when resting on that elevated rail (12), are shorter than the front legs (13).

**17.** Ship-to-shore gantry crane according to any of the claims 6, 7, 8, 9, 10, 11, 12, 13, 14, 15 or 16 **characterized in that** the boom or booms with their corresponding trolleys (10) are adapted for the use of multiple spreaders capable to maneuver all at once two or more standardized containers (1) contiguous in width (with the sides adjacent lengthways). In the case of a double spreader, this is identical in length to the simple spreaders but twice as wide; the longitudinal axis of this double spreader is, like that of the simple spreaders, coinciding with the longitudinal axis of the boom that supports the trolley (10) that maneuvers it. This disposition applies to the previously described ship-to-shore gantry cranes, with one or several independent booms (8) or with one or several booms (9) each of them with two or more independent trolleys (10) from each one of which hang double spreaders, always taking into account the necessary clearances, either for reasons of safety, logistics or of any other nature, between standardized containers (1) of contiguous double spreaders and between standardized container (1) - leg of the crane and optimizing as much as possible these clearances with regard to minimize the movement of the crane along the quay in the operations of loading and unloading. For the case of spreaders for maneuvering three or more standardized containers (1) the reasoning is equivalent.

**18.** Ship-to-shore gantry crane according to any of the claims 6, 7, 8, 9, 10, 11, 12, 13, 14, 15, 16 or 17 **characterized in that** the standardized container (1) is moved by the movement of the trolley (10) and of the spreader (15) from the ship to a lower frame (18), located under the crane and on which it is deposited; this lower frame (18), that may or may not be attached to the gantry crane, is served by one or more, independent with each other and parallel to the quay (16), overhead cranes (19); these overhead cranes (19) are mounted on lower horizontal beams (20) perpendicular to the quay (16), beams that are each connected at their ends to the two lower horizontal beams of the frame of the gantry crane (21) that are parallel to the quay (16); these overhead cranes (19) move orthogonally to the quay (16) each with a lower trolley (22), attached to it, equipped with another spreader (15) which in turn is coupled, by fixing it, to the standardized container (1) located in the lower frame (18) to move it and load it (or unload it in the inverse operation) in the means of transport (17) of standardized containers (1); with this the typical cycle of the ship-to-shore gantry crane is simplified.

**19.** Procedure for unloading of standardized containers (1) from a container ship, or other type of ship, to a quay (16) according to any of claims 1, 2, 3, 4 or 5 by means of ship-to-shore gantry cranes according to any of claims 6, 7, 8, 9, 10, 11, 12, 13, 14, 15 or 16 **characterized in that** it comprises the following steps:
- Berthing of container ship with transversal arrangement of the standardized containers (1) inside and outside the holds.
- Positioning on the edge of the quay (16) of ship-to-shore gantry crane with trolley (10) or independent trolleys with capacity to maneuver these standardized containers (1) by means of a spreader (15) whose longitudinal axis coincides in direction with the longitudinal axis of the standardized containers (1) (both axes orthogonal to the quay (16)).
- Forward movement of the trolley (10) under the boom of the crane, with the spreader (15) elevated, until being positioned on the standardized container (1) to be moved located on the container ship.
- With the lifting and lowering means located on the trolley (10), maneuver of descent of the spreader (15) until it is fixed and secured to the standardized container (1).
- Maneuver of ascent of the spreader (15) - standardized container (1) set and subsequent backwards movement of the trolley (10) under the boom, passing between the legs of the crane, until being positioned on the means of transport (17) previously located under the crane in orthogonal position to the quay (16).
- With the lifting and lowering means located on the trolley (10), maneuver of descent of the spreader (15) - standardized container (1) set until having the standardized container (1) resting on the means of transport (17) and fixed on the same; disconnection of the spreader (15) fixings on the standardized container (1).
- Maneuver of ascent of the empty spreader (15) and forward movement of the trolley (10) under the boom of the crane, with the spreader (15) elevated, until being positioned on a new standardized container (1) to be transferred, located in the container ship, to start again the cycle.

**20.** Procedure for loading of standardized containers (1) from a quay (16) to a container ship, or to other type of ship, according to any of claims 1, 2, 3, 4 or 5 by means of ship-to-shore gantry cranes according to any of claims 6, 7, 8, 9, 10, 11, 12, 13, 14, 15 or 16 **characterized in that** it comprises the following steps:
- Berthing of container ship with transversal arrangement of the standardized containers (1) inside and outside the holds.
- Positioning on the edge of the quay (16) of ship-to-shore gantry crane with trolley (10) or independent trolleys with capacity to maneuver these standardized containers (1) by means of a spreader (15) whose longitudinal axis coincides in direction with the longitudinal axis of the standardized containers (1) (both axes orthogonal to the quay (16)).
- Positioning on the edge of the quay (16), under the crane and in orthogonal position to the quay (16) of the means of transport (17) with the standardized container (1) to be loaded in the container ship.
- Movement of the trolley (10) under the boom of the crane until it is positioned, with the spreader (15) elevated, on the means of transport (17) - standardized container (1) set.
- With the lifting and lowering means located on the trolley (10), maneuver of descent of the spreader (15) until it is fixed and secured to the standardized container (1); release of the fixings of the standardized container (1) with the means of transport (17).
- Maneuver of ascent of the spreader (15) - standardized container (1) set and subsequent forward movement of the trolley (10) under the boom, passing between the legs of the crane, until being positioned on the corresponding cell in the container ship.
- With the lifting and lowering means located on the trolley (10), maneuver of descent of the spreader (15) - standardized container (1) set using the vertical cell guides (6) of the container ship until leaving the standardized container (1) in its final position, now on another standardized container (1) already placed, already on the bottom of the hold; subsequent disconnection of the spreader (15) fixings on the standardized container (1) and fixing of the standardized container (1) in the container ship with stowage elements.
- Maneuver of ascent of the empty spreader (15) and subsequent backwards movement of the trolley (10) under the boom, passing between the legs of the crane, until it is positioned, with the spreader (15) elevated, on a new means of transport (17) - standardized container (1) set to start again the cycle.

**21.** Procedure for loading and unloading of standardized containers (1) according to claims 19 and 20 by means of ship-to-shore gantry cranes according to claim 17 **characterized in that** the different steps are conducted with the use of a multiple spreader for maneuvering two or more standardized containers (1) all at once (standardized containers (1) with the long sides adjacent) and **in that** the means of transport (17) to be positioned under the crane must have adequate dimensions to be able to move two or more standardized containers (1) all at once, according to the number of standardized containers (1) the spreader is capable to maneuver.

**22.** Procedure for loading and unloading of standardized containers (1) according to claims 19, 20 or 21 by means of ship-to-shore gantry cranes according to claim 18 **characterized in that** an intermediate step exists by which the standardized container/s (1) is/are unloaded on a lower frame (18) (or loaded from that lower frame (18), in the inverse operation) located under the crane, instead of being directly unloaded on the means of transport (17) (or loaded from that means of transport (17), in the inverse operation); this lower frame (18), that may or may not be attached to the gantry crane, is served by one or more independent between them and parallel to the quay (16) overhead cranes (19); these overhead cranes (19) are mounted on lower horizontal beams (20) perpendicular to the quay (16), lower horizontal beams (20) that are united each by their ends to the two lower horizontal beams (21) of the frame of the gantry crane that are parallel to the quay (16); these overhead cranes (19) move orthogonally to the quay (16) along the lower horizontal beams (20) and each has a lower trolley (22), attached to it, equipped with another spreader, simple or multiple, which in turn is coupled, by fixing it, to the standardized container/s (1) located in the lower frame (18) to transfer it/them and load it/them (or unload it/them in the inverse operation) in the means of transport (17) of standardized containers (1); with this the typical cycle of the ship-to-shore gantry crane is simplified.
